# FASCICULE DE BREVET EUROPEEN

(11) **EP 3 262 470 B1**
(45) Date de publication et mention de la délivrance du brevet: **21.04.2021**
(21) Numéro de dépôt: 16714974.9
(22) Date de dépôt: 23.02.2016
(51) Int. Cl.: G05B 19/042, G05B 15/02, G05B 23/02

(54) **PROCÉDÉ DE CONFIGURATION ET PROCÉDÉ DE COMMANDE ET/OU DE CONTRÔLE D'UNE INTERFACE D'ÉQUIPEMENTS DOMOTIQUES**
VERFAHREN ZUR KONFIGURATION UND VERFAHREN ZUM BEFEHLEN UND/ODER STEUERN EINER HEIMAUTOMATISIERUNGSGERÄTSCHNITTSTELLE
METHOD FOR CONFIGURING AND METHOD FOR COMMANDING AND/OR CONTROLLING A HOME AUTOMATION EQUIPMENT INTERFACE

(30) Priorité: 23.02.2015 FR 1551507
(43) Date de publication de la demande: 03.01.2018
(73) Titulaire: SOMFY ACTIVITES SA, 74300 Cluses (FR)
(72) Inventeur: DEVIS, Frédéric, 74330 Epagny (FR); DUCHENE, Isabelle, 74970 Mariginer (FR); RETY, Claudia, 74300 Saint Sigismond (FR); DANIS, Michael, 74000 Annecy (FR)
(74) Mandataire: Verriest, Philippe
(86) Numéro de dépôt international: PCT/FR2016/050414
(87) Numéro de publication internationale: WO 2016/135412

(56) Documents cités:
- EP-A1- 2 196 877
- WO-A1-2013/068400

## Description

La présente invention concerne un procédé de configuration d'une interface de commande et/ou de contrôle d'équipements domotiques et/ou de capteurs d'une installation domotique d'un bâtiment, un procédé de commande d'une telle interface de commande et/ou de contrôle configurée conformément au procédé de configuration précité, une interface de commande et/ou de contrôle, ainsi qu'une installation domotique incorporant une telle interface de commande et/ou de contrôle.

Il est connu d'utiliser des équipements domotiques, par exemple, des actionneurs agencés pour déplacer ou modifier le réglage d'un élément du bâtiment, comme un volet ou un dispositif d'éclairage ou encore un système d'alarme.

Un équipement domotique peut également être un capteur d'une grandeur physique, telle qu'une température ou un degré de luminosité ou d'hygrométrie. Un actionneur peut également comprendre un capteur.

Il est connu d'utiliser une entité centrale de l'installation domotique destinée aux équipements domotiques et/ou aux capteurs. Cette entité centrale est ainsi configurée pour rassembler des informations en provenance des équipements domotiques, par exemple leurs positions, s'ils sont en fonctionnement, sont en veille, etc., et des capteurs.

L'entité centrale dispose également de valeurs de grandeurs physiques en provenance des capteurs. Cet ensemble d'informations en provenance des équipements domotiques et des capteurs définit la situation globale du bâtiment et de l'installation domotique.

L'entité centrale est également agencée pour échanger des données avec un serveur distant. Ce serveur permet aussi de relayer les données vers d'autres entités centrales aptes à communiquer avec lui.

La gestion de l'ensemble des informations en provenance des équipements domotiques et des capteurs apparaît donc comme un élément important pour détecter un fonctionnement anormal ou une situation imprévue, comme une fenêtre restée ouverte ou un dispositif d'éclairage resté allumé.

Toutefois, la vérification de l'état de chaque équipement domotique et chaque capteur s'avère fastidieuse et difficile à établir de manière régulière ou ciblée. Dans ces conditions, il apparaît difficile d'obtenir rapidement une information particulière de l'installation domotique ou du bâtiment jugée comme utile par un utilisateur.

WO 2013/068400 A1 divulgue un procédé de constitution d'une structure de données de référence et un procédé de commande d'un actionneur domotique. La présente invention vise à résoudre tout ou partie des inconvénients mentionnés ci-dessus.

A cet effet, la présente invention concerne un procédé selon la revendication 1.

Un ensemble d'interrogations d'état relatives à des états possibles d'équipements domotiques et de capteurs d'une installation domotique peut comprendre un nombre important d'interrogations d'état.

En effet une installation domotique peut comprendre une multitude d'équipements domotiques et de capteurs qui peuvent comprendre quant à eux une multitude d'états possibles.

Un équipement domotique comme un volet peut par exemple présenter des états comme : complètement ouvert, complètement fermé, ouvert entre 10 et 20%, incliné d'un angle compris entre 5° et 20° par rapport à la verticale, etc.

Dans ces conditions, le procédé de configuration permet à l'utilisateur de déterminer préalablement sur quels états possibles il souhaite en particulier avoir un retour. L'utilisateur peut, par exemple, sélectionner une interrogation d'état pour savoir si un volet est complètement fermé car seul un retour sur cet état l'intéresse.

Une fois constituée, la sélection correspond à un sous-ensemble restreint d'interrogations d'état possibles qui sont pertinents aux yeux de l'utilisateur de l'interface de commande et/ou de contrôle.

Le procédé de configuration prévoit, en outre, qu'un élément de l'interface soit agencé pour répondre en cas de sollicitation de l'utilisateur. La mise en œuvre de ce procédé de configuration permet donc à un utilisateur de disposer d'une interface de commande et/ou de contrôle lui permettant de récupérer directement les indications d'états réels correspondant à la sélection préalable d'interrogations d'état.

Du point de vue de l'utilisateur, les indications d'états réels pertinentes sont récupérées rapidement sans avoir à traiter des indications réelles ne l'intéressant pas. Du point de vue de l'installation, ces dispositions permettent une économie de ressources et un transfert ou affichage du strict minimum de données nécessaires.

Le procédé de configuration permet donc de faire remonter des indications d'états correspondant à une sélection en provenance d'équipements domotiques, comme des actionneurs et également en provenance de capteurs.

Dans le cas d'un capteur, une interrogation d'état de la sélection peut par exemple être : « est-ce que le détecteur d'ouverture constate bien qu'une fenêtre (ou porte) est fermée ? » ou « est-ce que les détecteurs d'ouverture constatent bien que les fenêtres (ou portes) sont fermées ? ».

Cette interrogation d'état permet de savoir si une fenêtre est potentiellement ouverte, sachant que la motorisation de fenêtre classique dans le résidentiel n'existe pas ou très peu aujourd'hui. L'utilisation de capteurs est donc avantageuse pour faire remonter des états réels d'éléments du bâtiment non équipés d'actionneurs.

Selon un aspect de l'invention, l'indication d'état relative à au moins un état possible d'au moins un équipement domotique et/ou d'au moins un capteur peut correspondre à un niveau de batterie et/ou à la présence d'un défaut diagnostiqué par l'équipement domotique et/ou le capteur.

Selon un aspect de l'invention, l'élément de l'interface comprend un ou plusieurs boutons et/ou une partie de commande tactile.

Selon l'invention, l'étape de constitution d'une sélection d'au moins une interrogation d'état comprend au moins les étapes suivantes : affichage d'interrogations d'état de l'ensemble d'interrogations d'état, désignation d'au moins une interrogation d'état parmi les interrogations d'état affichées, génération de la sélection de l'au moins une interrogation d'état, à partir de l'au moins une interrogation d'état désignée parmi les interrogations d'état affichées.

Selon l'invention, l'étape d'affichage d'interrogations d'état de l'ensemble d'interrogations d'état et l'étape de désignation d'au moins une interrogation d'état, consiste en l'affichage sur l'interface de commande et/ou de contrôle d'une indication relative à au moins une interrogation d'état et en une action de désignation, par exemple par contact sur une partie tactile de l'interface ou un bouton de l'interface.

Selon un aspect de l'invention, ledit procédé comprend une étape de sélection d'au moins une interrogation d'état par défaut.

L'étape de sélection par défaut permet à un utilisateur de disposer d'interrogations d'état sélectionnées par défaut s'il n'est pas intervenu durant le procédé de configuration. Cette disposition peut être utile, par exemple, si un utilisateur ne souhaite pas prendre part à la sélection mais souhaite pouvoir bénéficier ultérieurement d'une récupération d'indications d'états réels limitées aux éléments importants de l'installation domotique.

La présente invention concerne également un procédé de commande et/ou de contrôle d'une interface de commande et/ou de contrôle d'équipements domotiques et/ou de capteurs d'une installation domotique d'un bâtiment comprenant au moins les étapes suivantes :
- réalisation d'une configuration de l'interface de commande et/ou de contrôle en appliquant un procédé de configuration tel que décrit ci-avant,
- une émission d'une requête de collecte à destination de l'entité centrale de l'installation domotique, la requête de collecte comprenant la sélection de l'au moins une interrogation d'état,
- une obtention, pour chaque interrogation d'état de la sélection de l'au moins une interrogation d'état, d'au moins une indication d'état correspondante relative à au moins un état réel d'au moins un équipement domotique et/ou d'au moins un capteur.

Lorsque la configuration a préalablement été réalisée par la mise en œuvre du procédé de configuration, le procédé de commande et/ou de contrôle peut être exécuté rapidement et sans demander d'effort particulier à l'utilisateur.

En effet, l'utilisateur doit faire en sorte qu'une requête de collecte soit émise et ensuite les indications d'états réels qu'il attend sont obtenues sans plus d'effort. Notamment, l'utilisateur n'a pas de tri à faire parmi les indications d'états qu'il reçoit car il a préalablement configuré l'interface de commande et/ou de contrôle pour ne recevoir que les informations qui l'intéresse. Du point de vue de l'installation, ces dispositions permettent également d'économiser les ressources, notamment l'énergie nécessaire pour recueillir les informations et les transmettre vers l'interface de commande, et permet de limiter la quantité de trames de communication.

Selon un aspect de l'invention, ledit procédé de commande et/ou de contrôle comprend, en outre, une étape d'établissement d'une information globale d'état à partir de l'au moins une indication d'état correspondante.

Selon un aspect de l'invention, l'étape d'obtention d'au moins une indication d'état correspondante relative à au moins un état réel est suivie par une étape d'affichage, par exemple, suite à une requête en affichage d'un utilisateur ou sous forme de notification automatique et/ou paramétrable apparaissant sur une partie d'affichage de l'interface.

La présente invention concerne, en outre, un produit programme d'ordinateur comprenant des instructions de code agencées pour mettre en œuvre les étapes d'un procédé de configuration tel que décrit ci-avant, lorsque ledit programme est exécuté par un processeur de l'interface de commande et/ou de contrôle.

Selon un aspect de l'invention, ledit produit programme d'ordinateur est agencé sous forme d'application téléchargeable sur ladite interface de commande et/ou de contrôle.

La présente invention concerne également une interface de commande et/ou de contrôle comprenant en mémoire les instructions de code d'un produit programme d'ordinateur tel que décrit ci-avant et agencé pour exécuter un tel produit programme d'ordinateur, ladite interface de commande et/ou de contrôle étant agencée pour être configurée en appliquant un procédé de configuration tel que décrit ci-avant.

Selon un aspect de l'invention, ladite interface comprend un terminal, en particulier un téléphone intelligent ou une tablette, ledit terminal comprenant un dispositif d'entrée de données et un dispositif d'affichage.

La présente invention concerne, en outre, une installation domotique d'un bâtiment comprenant une pluralité d'équipements domotiques et/ou de capteurs, une entité centrale comprenant un module de communication avec au moins un équipement domotique et/ou au moins un capteur parmi la pluralité d'équipements domotiques et/ou de capteurs, et une interface de commande et/ou de contrôle telle que décrite ci-avant agencée pour communiquer avec ladite entité centrale ou intégrée à ladite entité centrale.

De toute façon l'invention sera bien comprise à l'aide de la description qui suit en référence aux dessins schématiques annexés représentant, à titre d'exemple non limitatif, une forme d'exécution de ce procédé de configuration et de ce procédé de commande et/ou de contrôle :
La figure 1 est une vue schématique d'un bâtiment et d'une installation domotique conforme à un mode de réalisation de l'invention ;
La figure 2 est un schéma présentant les liens fonctionnels entre les éléments de l'installation domotique illustrée à la figure 1, l'installation domotique comprenant, notamment, un serveur et une interface de commande et/ou de contrôle ;
Les figures 3a à 3c sont des vues de face de l'interface de commande et/ou de contrôle lors de l'exécution par une application téléchargeable d'un procédé de configuration de l'interface de commande et/ou de contrôle illustrée à la figure 2 ;
Les figures 4a et 4b sont des vues de face de l'interface de commande et/ou de contrôle lors de l'exécution par l'application téléchargeable d'un procédé de commande et/ou de contrôle de l'interface de commande et/ou de contrôle illustrée à la figure 2 ;
La figure 5 est une vue de face de l'interface de commande et/ou de contrôle comprenant des icônes d'accès à l'application téléchargeable ;
La figure 6 est une vue de face de l'interface de commande et/ou de contrôle présentant une liste de notifications dont une relative à l'application téléchargeable ; et
La figure 7 est un ordinogramme des étapes du procédé de configuration.

Dans la description détaillée qui va suivre des figures définies ci-dessus, les mêmes éléments ou les éléments remplissant des fonctions identiques pourront conserver les mêmes références de manière à simplifier la compréhension de l'invention.

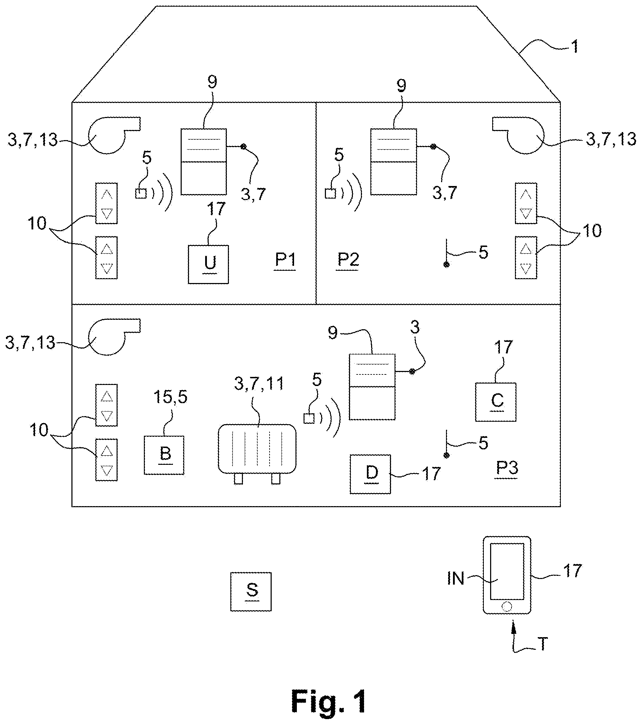

Comme illustré à la figure 1, un bâtiment 1 comprend trois pièces P1, P2, P3. Le bâtiment 1 comprend également des équipements domotiques 3 et des capteurs 5, chaque capteur 5 étant agencé pour mesurer une grandeur physique, par exemple une température ou un degré d'hygrométrie, ou agencé pour déterminer la position d'un élément du bâtiment 1, comme l'état d'ouverture d'un volet roulant 9.

Un équipement domotique 3 peut être un actionneur 7 agencé pour déplacer ou régler un élément du bâtiment 1, par exemple un actionneur 7 pour déplacer un volet roulant 9 ou un système de régulation 10 pour un chauffage 11 ou un système aéraulique 13.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être un capteur de température, un capteur d'ensoleillement ou un capteur d'humidité. Des capteurs 5 de position d'équipements domotiques 3 du bâtiment 1, comme, par exemple, des capteurs de position d'un ouvrant tel une fenêtre, motorisée ou non, peuvent également être prévus.

Un équipement domotique 3 et un capteur 5 sont ainsi à considérer comme des entités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Une installation domotique 17 est agencée pour regrouper l'ensemble des données en provenance des équipements domotiques 3 et pour traiter ces données.

L'installation domotique 17 comprend une entité centrale U agencée pour commander et/ou contrôler l'ensemble des équipements domotiques 3 à distance, notamment en utilisant un protocole de communication sans fil, par exemple un protocole de communication radio.

L'installation domotique 17 comprend, en outre, un terminal de communication mobile T pourvu d'une interface de commande et/ou de contrôle IN permettant d'afficher des informations ou des données comme détaillé plus loin.

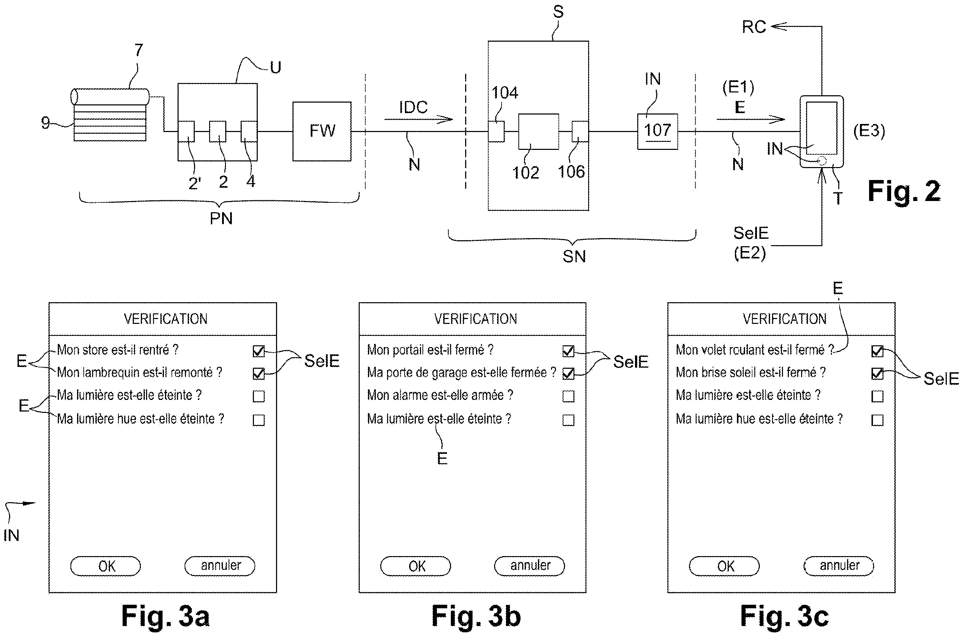

Comme cela est représenté sur la figure 2, l'entité centrale U est agencée pour communiquer avec un serveur S.

L'entité centrale U est disposée sur un réseau privé PN, dont l'accès est en général protégé par un pare-feu FW. Le serveur S est également disposé sur un réseau privé SN. Le réseau privé PN est relié à un réseau étendu N, par exemple Internet.

En particulier, l'entité centrale U de l'installation domotique 17 comprend une unité de traitement 2 agencée pour contenir et exécuter un premier programme d'ordinateur.

A titre d'exemple, l'unité de traitement 2 comprend un processeur, une mémoire flash de stockage ainsi d'un mémoire vive, et d'une puce Ethernet.

L'entité centrale U comprend, en outre, au moins un module de communication 2' destinée au contrôle et/ou à la commande d'équipements domotiques 3 et/ou de capteurs 5, les équipements domotiques 3 pouvant être des actionneurs 7 ou un système d'alarme.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9.

La réception d'informations d'un capteur 5 fournissant des informations de présence d'un utilisateur ou des valeurs des paramètres environnants, comme la température, l'humidité et la luminosité, est également prévue. De la même façon, l'entité centrale U peut permettre le contrôle et/ou la commande d'un système d'alarme.

L'entité centrale U comprend, en outre, un module de communication 4 avec le serveur S. Le serveur S permet la commande et/ou le contrôle à distance et comprend une unité de traitement 102 agencée pour contenir et exécuter un deuxième programme d'ordinateur.

Le serveur S comprend en outre au moins une interface de communication 104 destinée à la communication avec l'entité centrale U.

Le serveur S peut comprendre également une interface de communication 106 destinée à la communication avec une interface de commande et/ou de contrôle IN.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

L'application téléchargeable présente un affichage au niveau de l'écran du terminal T, comme représenté aux figures 3a à 6. L'exécution de l'application téléchargeable sera présentée plus en détail ci-dessous selon les étapes d'un procédé de configuration et d'un procédé de commande et/ou de contrôle de l'interface IN.

Il est à noter qu'il peut être prévu une ou plusieurs applications téléchargeables, l'utilisation de plusieurs applications permettant de prendre en compte des ensembles d'interrogations d'état distincts correspondant à des parties du bâtiment 1 ou à des thèmes distincts, comme, par exemple, les équipements domotiques 3 et/ou capteurs 5 associés à la terrasse, les équipements domotiques et/ou les capteurs associés aux ouvrants, et les équipements domotiques 3 et/ou les capteurs 5 associés aux accès du bâtiment 1 et/ou de l'enceinte du bâtiment 1.

Alternativement, une même application peut comprendre plusieurs fenêtres relatives à différents thèmes ou différents parties du bâtiment 1.

Ces procédés concernent la récupération et l'affichage sur l'écran de l'interface de commande et/ou de contrôle IN d'informations sur des états réels d'équipements domotiques 3 et de capteurs 5 de l'installation domotique 17.

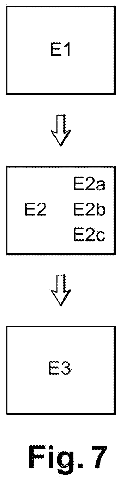

Comme illustré à la figure 7, le procédé de configuration comprend une première étape E1 consistant à collecter un ensemble d'interrogations d'état E relatives à des états possibles d'équipements domotiques 3 et/ou de capteurs 5.

Les équipements domotiques 3 et les capteurs 5 en question sont agencés pour communiquer avec l'entité centrale U. L'entité centrale U et le serveur S connaissent ainsi tous les états possibles qui sont envisageables pour ces différents équipements domotiques 3 et capteurs 5.

A titre d'exemple, une interrogation d'état peut être une indication ou une information concernant un retour d'un équipement domotique 3 sur sa position ou son réglage, comme la position d'un volet roulant 9 ou le réglage d'un thermostat d'un chauffage 11.

Une interrogation d'état E peut également concerner un niveau de charge d'une batterie d'un équipement domotique 3 ou un défaut diagnostiqué au niveau d'un équipement domotique 3.

Une interrogation d'état E se présente sous la forme d'une phrase interrogative ou question, permettant ainsi de faciliter la compréhension et la sélection par un utilisateur.

Une interrogation d'état E concernant un capteur 5 peut être une indication concernant la valeur mesurée d'une grandeur physique dans le bâtiment 1, comme une température ou un degré d'hygrométrie. Elle peut aussi être une indication sur la position d'un élément du bâtiment 1, par exemple si le capteur 5 est un capteur de position d'une fenêtre. L'interrogation d'état E correspondante peut donc porter sur la position d'ouverture de la fenêtre.

L'utilisation de capteurs 5 pour faire remonter des informations du bâtiment 1 est particulièrement intéressante pour connaître l'état réel d'éléments du bâtiment 1 ne comprenant pas d'actionneur 7.

Ceci est le cas de fenêtres non motorisées auxquelles peut être associé un capteur de position, afin de déterminer l'état d'ouverture ou de fermeture d'une fenêtre.

Une deuxième étape E2 consiste à constituer une sélection d'au moins une interrogation d'état SelE parmi l'ensemble des interrogations d'état E.

Tout d'abord et comme illustré aux figures 3a à 3c, des interrogations d'état E sont affichées, lors de l'étape E2a, sur l'interface de commande et/ou de contrôle IN.

Ensuite, un utilisateur procède à la désignation d'au moins l'une des interrogations d'état E affichées. Dans le mode de réalisation présenté, l'action de désignation correspond à un contact sur la partie tactile de l'interface de commande et/ou de contrôle IN pour cocher une case correspondant à l'interrogation d'état sélectionnée SelE.

Les figures 3a à 3c représentent l'affichage de trois applications lors des phases d'affichage et de désignation, correspondant respectivement à trois thèmes distincts : les ouvrants - Figure 3a, l'accès - Figure 3b, les équipements de terrasse - Figure 3c.

Enfin, lorsque la désignation d'au moins une interrogation d'état E est réalisée, l'interface de commande et/ou de contrôle IN est agencée pour procéder à la génération, lors de l'étape E2c, de la sélection d'au moins une interrogation d'état SeIE.

De manière alternative et si l'utilisateur ne souhaite pas procéder lui-même à une désignation manuelle, une sélection SelE par défaut peut être générée par l'interface de commande et/ou de contrôle IN.

Cette sélection SelE peut, par exemple, comprendre les interrogations d'état qui sont les plus probables d'être choisies par un utilisateur ou alors celles qui reflètent des caractéristiques importantes du bâtiment 1 comme la fermeture ou l'ouverture des ouvrants ou l'état de l'alarme.

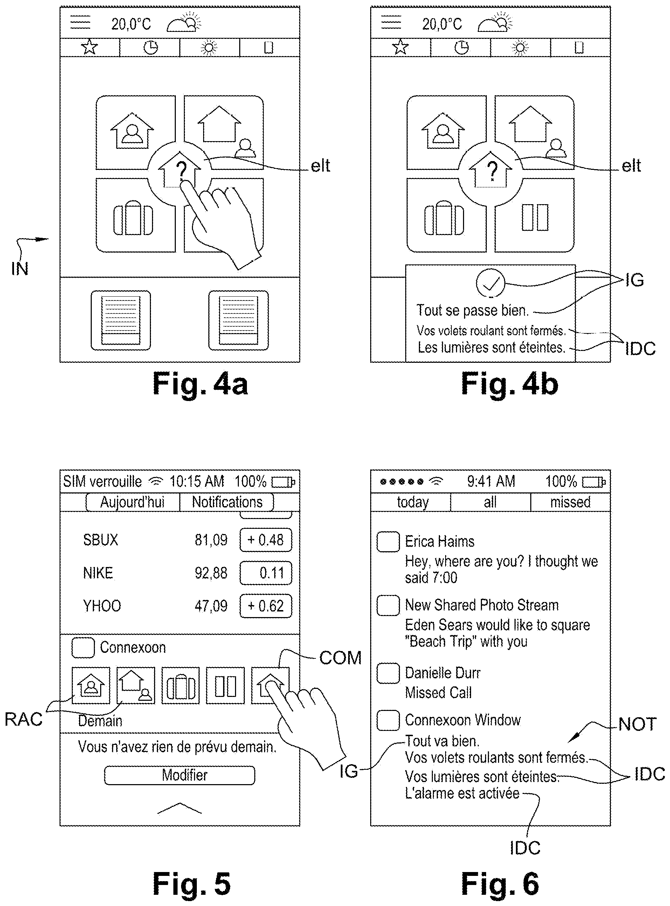

Une troisième étape E3 consiste en la configuration d'un élément elt de l'interface IN comme, par exemple, une portion de la partie tactile de l'interface IN, comme représenté à la figure 4a.

La présence de cet élément elt permet à un utilisateur de pouvoir potentiellement envoyer une requête de collecte RC à destination de l'entité centrale U en vue de récupérer des indications d'états correspondantes IDC relatives aux interrogations d'état sélectionnées SeIE.

Comme illustré aux figures 4a et 4b, un procédé de commande et/ou de contrôle consiste, donc, pour un utilisateur à interagir avec l'élément elt de l'interface IN.

La mise en œuvre du procédé de commande et/ou de contrôle consiste donc dans une première étape à réaliser une configuration selon le procédé de configuration, de telle sorte que l'élément elt de l'interface IN soit accessible à un utilisateur et fonctionnel.

L'utilisateur émet alors une requête en collecte RC à destination de l'entité centrale U par un contact sur l'élément elt de l'interface IN. A la réception de cette requête en collecte RC, l'entité centrale U émet des indications d'états correspondantes IDC relatives aux interrogations d'état sélectionnées à destination de l'interface IN.

Comme illustré à la figure 4b, les indications d'état correspondantes IDC sont ensuite affichées. Une information globale IG synthétisant les indications d'état correspondantes IDC obtenues peut également être générée et affichée par l'interface IN.

Ces dispositions permettent une économie de ressources et un transfert de peu de données. En effet, plutôt que de charger toutes les indications d'état de tous les équipements domotiques 3 et de tous les capteurs 5, seules les indications d'état correspondantes IDC qui intéressent l'utilisateur sont chargées sur l'interface de commande et/ou de contrôle IN.

Le procédé de configuration et le procédé de commande et/ou de contrôle décrits ici permettent de récupérer des informations pertinentes et seulement ces informations pour les porter à la connaissance d'un utilisateur de terminal de communication T.

La mise en œuvre du procédé de commande et/ou de contrôle est rapide lorsque la configuration a été réalisée préalablement. De plus, si l'utilisateur ne procède pas lui-même à la sélection, des indications d'état définies par défaut lui sont envoyées.

Ce procédé de configuration permet donc d'obtenir rapidement et de manière automatique des informations synthétiques sur la situation d'un bâtiment 1 à un instant précis.

Ce procédé permet également de réaliser des vérifications comme, par exemple, l'état d'ouverture des volets roulants ,9 lorsque l'utilisateur part en vacances ou l'état des batteries de certains actionneurs 7. L'utilisateur peut ainsi consulter les indications d'état correspondantes IDC pour savoir si les volets roulants 9 sont tous fermés ou alors si l'alarme est bien enclenchée.

De plus et comme illustré aux figures 5 et 6, l'application téléchargeable peut être associée à un élément d'interface sous forme d'un bouton de commande COM destiné à être intégré dans une liste de raccourcis RAC du terminal T, par exemple d'un téléphone portable, afin de permettre un accès direct à la fonction d'émission d'une requête de collecte RC.

On prévoit également lors de l'exécution du procédé de commande et/ou de contrôle une étape d'émission et d'affichage d'une notification NOT. Cette notification NOT apparaît pour rappeler les indications d'état correspondantes IDC et l'indication globale IG obtenues après l'émission de la dernière requête de collecte RC.

D'autres notifications peuvent également apparaître au niveau de l'interface de commande et/ou de contrôle IN, suite à une mise à jour effectuée sans requête de collecte RC, lorsque l'entité centrale U détecte une modification d'une indication d'état correspondante IDC et en informe l'interface de commande et/ou de contrôle IN.

## Revendications

1. Procédé de configuration d'une interface de commande et/ou de contrôle (IN) d'équipements domotiques (3) d'une installation domotique (17) d'un bâtiment (1), mis en œuvre par ordinateur et comprenant au moins les étapes suivantes :
- (E1) collecte d'un ensemble d'interrogations d'état (E) relatives à au moins un état possible d'au moins un équipement domotique (3),
- (E2) constitution d'une sélection d'au moins une interrogation d'état (SeIE) de l'ensemble d'interrogations d'état (E), la sélection correspondant à un sous-ensemble restreint de l'ensemble d'interrogations d'état (E) et consistant en :
o l'affichage (E2a) d'interrogations d'état (E) de l'ensemble d'interrogations d'état (E),
o la désignation (E2b) d'au moins une interrogation d'état (E) parmi les interrogations d'état (E) affichées, l'étape d'affichage (E2a) d'interrogations d'état (E) de l'ensemble d'interrogations d'état (E) et l'étape de désignation (E2b) d'au moins une interrogation d'état (E) consistant en l'affichage sur l'interface de commande et/ou de contrôle (IN) d'une indication relative à au moins une interrogation d'état (E) et en une action de désignation par contact sur une partie tactile de l'interface (IN) ou un bouton de l'interface (IN),
o la génération (E2c) de la sélection de l'au moins une interrogation d'état (SeIE), à partir de l'au moins une interrogation d'état (E) désignée parmi les interrogations d'état (E) affichées,
- (E3) configuration d'un élément (elt) de l'interface (IN) sur la base de la sélection de l'au moins une interrogation d'état (SeIE), de façon à pouvoir déclencher, en réponse à une interaction d'un utilisateur avec ledit élément (elt) de l'interface (IN) :
• une émission d'une requête de collecte (RC) à destination d'une entité centrale (U) de l'installation domotique (17), la requête de collecte (RC) comprenant la sélection de l'au moins une interrogation d'état (SeIE),
• une obtention, pour chaque interrogation d'état (E) de la sélection de l'au moins une interrogation d'état (SeIE), d'au moins une indication d'état correspondante (IDC) relative à au moins un état réel d'au moins un équipement domotique (3).

2. Procédé de configuration selon selon la revendication 1, **caractérisé en ce que** ledit procédé comprend une étape de sélection d'au moins une interrogation d'état (SeIE) par défaut.

3. Procédé de commande et/ou de contrôle d'une interface de commande et/ou de contrôle (IN) d'équipements domotiques (3) d'une installation domotique (17) d'un bâtiment (1) comprenant au moins les étapes suivantes :
- réalisation d'une configuration de l'interface de commande et/ou de contrôle (IN) en appliquant un procédé de configuration selon l'une des revendications 1 ou 2,
- une émission d'une requête de collecte (RC) à destination de l'entité centrale (U) de l'installation domotique (17), la requête de collecte (RC) comprenant la sélection de l'au moins une interrogation d'état (SeIE),
- une obtention, pour chaque interrogation d'état (E) de la sélection de l'au moins une interrogation d'état (SeIE), d'au moins une indication d'état correspondante (IDC) relative à au moins un état réel d'au moins un équipement domotique (3).

4. Procédé de commande et/ou de contrôle selon la revendication précédente, **caractérisé en ce que** ledit procédé comprend, en outre, une étape d'établissement d'une information globale d'état (IG) à partir de l'au moins une indication d'état correspondante (IDC).

5. Produit programme d'ordinateur comprenant des instructions de code agencées pour mettre en œuvre les étapes d'un procédé de configuration selon l'une des revendications 1 ou 2, lorsque ledit programme est exécuté par un processeur de l'interface de commande et/ou de contrôle (IN).

6. Produit programme d'ordinateur selon la revendication précédente agencé sous forme d'application téléchargeable sur ladite interface de commande et/ou de contrôle (IN).

7. Interface de commande et/ou de contrôle (IN) comprenant en mémoire les instructions de code d'un produit programme d'ordinateur selon l'une quelconque des revendications 5 ou 6 et agencé pour exécuter un tel produit programme d'ordinateur, ladite interface de commande et/ou de contrôle (IN) étant agencée pour être configurée en appliquant un procédé de configuration selon l'une des revendications 1 ou 2.

8. Interface de commande et/ou de contrôle (IN) selon la revendication précédente, **caractérisée en ce que** ladite interface (IN) comprend un terminal, en particulier un téléphone intelligent ou une tablette, ledit terminal comprenant un dispositif d'entrée de données et un dispositif d'affichage.

9. Installation domotique (17) d'un bâtiment (1) comprenant une pluralité d'équipements domotiques (3), une entité centrale (U) comprenant un module de communication (2') avec au moins un équipement domotique (3) parmi la pluralité d'équipements domotiques (3), et une interface de commande et/ou de contrôle (IN) selon l'une quelconque des revendications 7 ou 8 agencée pour communiquer avec ladite entité centrale (U) ou intégrée à ladite entité centrale (U).

## Patentansprüche

1. Verfahren zur Konfiguration einer Steuerungs- und/oder Kontrollschnittstelle (IN) von Heimautomatisierungsgeräten (3) einer Heimautomatisierungsanlage (17) eines Gebäudes (1), das von einem Computer umgesetzt wird, mindestens die folgenden Schritte umfassend:
- (E1) Sammeln einer Reihe von Zustandsabfragen (E) in Bezug auf mindestens einen möglichen Zustand mindestens eines Heimautomatisierungsgeräts (3),
- (E2) Erstellen einer Auswahl mindestens einer Zustandsabfrage (SeIE) der Reihe von Zustandsabfragen (E), wobei die Auswahl einer eingeschränkten Teilreihe der Reihe von Zustandsabfragen (E) entspricht, und aus Folgendem besteht:
o der Anzeige (E2a) von Zustandsabfragen (E) der Reihe von Zustandsabfragen (E),
o der Bezeichnung (E2b) mindestens einer Zustandsabfrage (E) aus den angezeigten Zustandsabfragen (E), wobei der Anzeigeschritt (E2a) von Zustandsabfragen (E) der Reihe von Zustandsabfragen (E), und der Bezeichnungsschritt (E2b) mindestens einer Zustandsabfrage (E) aus der Anzeige auf der Steuerungs- und/oder Kontrollschnittstelle (IN) eines Hinweises in Bezug auf mindestens eine Zustandsabfrage (E) und aus einer Aktion einer Bezeichnung durch Kontakt auf einem berührungsempfindlichen Teil der Schnittstelle (IN) oder einer Schnittstellentaste (IN) besteht,
o dem Generieren (E2c) der Auswahl der mindestens einen Zustandsabfrage (SeIE) ausgehend von der mindestens einen Zustandsabfrage (E), die aus den angezeigten Zustandsabfragen (E) bezeichnet wird,
- (E3) Konfigurieren eines Elements (elt) der Schnittstelle (IN) auf der Basis der Auswahl der mindestens einen Zustandsabfrage (SeIE), um als Reaktion auf eine Interaktion eines Nutzers mit dem Element (elt) der Schnittstelle (IN) Folgendes auszulösen:
• eine Sendung einer Sammelanfrage (RC) an eine Zentraleinheit (U) der Heimautomatisierungsanlage (17), wobei die Sammelanfrage (RC) die Auswahl der mindestens einen Zustandsabfrage (SeIE) umfasst,
• einen Erhalt, für jede Zustandsabfrage (E), der Auswahl der mindestens einen Zustandsabfrage (SeIE), mindestens eines entsprechenden Zustandshinweises (IDC) in Bezug auf mindestens einen Ist-Zustand mindestens eines Heimautomatisierungsgerätes (3).

2. Verfahren zur Konfiguration nach Anspruch 1, **dadurch gekennzeichnet, dass** das Verfahren einen Schritt zur Auswahl mindestens einer standardgemäßen Zustandsabfrage (SeIE) umfasst.

3. Verfahren zum Steuern und/oder Kontrollieren einer Steuerungs- und/oder Kontrollschnittstelle (IN) von Heimautomatisierungsgeräten (3) einer Heimautomatisierungsanlage (17) eines Gebäudes (1), mindestens die folgenden Schritte umfassend:
- Realisieren einer Konfiguration der Steuerungs- und/oder Kontrollschnittstelle (IN) durch Anwenden eines Verfahrens zur Konfiguration nach einem der Ansprüche 1 oder 2,
- Senden einer Sammelanfrage (RC) an eine Zentraleinheit (U) der Heimautomatisierungsanlage (17), wobei die Sammelanfrage (RC) die Auswahl der mindestens einen Zustandsabfrage (SeIE) umfasst,
- einen Erhalt, für jede Zustandsabfrage (E), der Auswahl der mindestens einen Zustandsabfrage (SeIE), mindestens eines entsprechenden Zustandshinweises (IDC) in Bezug auf mindestens einen Ist-Zustand mindestens eines Heimautomatisierungsgerätes (3).

4. Verfahren zum Steuern und/oder Kontrollieren nach dem vorstehenden Anspruch, **dadurch gekennzeichnet, dass** das Verfahren weiter einen Schritt des Erstellens einer allgemeinen Zustandsinformation (IG) ausgehend von dem mindestens einen entsprechenden Zustandshinweis (IDC) umfasst.

5. Computerprogrammprodukt, Codeanweisungen umfassend, die ausgeführt sind, um die Schritte eines Verfahrens zur Konfiguration nach einem der Ansprüche 1 oder 2 umzusetzen, wenn das Programm durch einen Prozessor der Steuerungs- und/oder Kontrollschnittstelle (IN) ausgeführt wird.

6. Computerprogrammprodukt nach dem vorstehenden Anspruch, das in Form einer auf die Steuerungs- und/oder Kontrollschnittstelle (IN) herunterladbaren Applikation ausgeführt ist.

7. Steuerungs- und/oder Kontrollschnittstelle (IN), im Speicher Codeanweisungen eines Computerprogrammprodukts nach einem der Ansprüche 5 oder 6 umfassend, und ausgeführt, um ein solches Computerprogrammprodukt durchzuführen, wobei die Steuerungs- und/oder Kontrollschnittstelle (IN) ausgeführt ist, um durch Anwenden eines Verfahrens zur Konfiguration nach einem der Ansprüche 1 oder 2 konfiguriert zu werden.

8. Steuerungs- und/oder Kontrollschnittstelle (IN) nach dem vorstehenden Anspruch, **dadurch gekennzeichnet, dass** die Schnittstelle (IN) ein Endgerät, insbesondere ein Smartphone oder einen Tablet-Computer umfasst, wobei das Endgerät eine Dateneingangsvorrichtung und eine Anzeigevorrichtung umfasst.

9. Heimautomatisierungsanlage (17) eines Gebäudes (1), umfassend eine Vielzahl von Heimautomatisierungsgeräten (3), eine Zentraleinheit (U), die ein Kommunikationsmodul (2') mit mindestens einem Heimautomatisierungsgerät (3) aus einer Vielzahl von Heimautomatisierungsgeräten (3) und eine Steuerungs- und/oder Kontrollschnittstelle (IN) nach einem der Ansprüche 7 oder 8 umfasst, die ausgeführt ist, um mit der Zentraleinheit (U) zu kommunizieren, oder in die Zentraleinheit (U) integriert ist.

## Claims

1. A method for configuring a command and/or control interface (IN) of home automation equipments (3) of a home automation installation (17) of a building (1), implemented by a computer and comprising at least the following steps:
- (E1) collecting a set of status queries (E) relating to at least one possible status of at least one home automation equipment (3),
- (E2) constituting a selection of at least one status query (SeIE) of the set of status queries (E), the selection corresponding to a restricted subset of the set of status queries (E) and consisting of:
∘ the display (E2a) of status queries (E) of the set of status queries (E),
∘ the designation (E2b) of at least one status query (E) among the displayed status queries (E), the displaying step (E2a) of status queries (E) of the set of status queries (E) and the designation step (E2b) of at least one status query (E) consisting of the display on the command and/or control interface (IN) of an indication relating to at least one status query (E) and a designation action by contact on a tactile portion of the interface (IN) or a button of the interface (IN),
∘ the generation (E2c) of the selection of at least one status query (SeIE), from at least one status query (E) designated among the displayed status queries (E),
- (E3) configuring an element (elt) of the interface (IN) on the basis of the selection of the at least one status query (SeIE), so as to be able to trigger, in response to an interaction of a user with said element (elt) of the interface (IN):
• an emission of a collection request (RC) toward a central entity (U) of the home automation installation (17), the collection request (RC) comprising the selection of the at least one status query (SeIE),
• an obtainment, for each status query (E) of the selection of the at least one status query (SeIE), of at least one corresponding status indication (IDC) relating to at least one actual status of at least one home automation equipment (3).

2. The configuration method according to claim 1, **characterized in that** said method comprises a step of selecting at least one default status query (SeIE).

3. A method for commanding and/or controlling a command and/or control interface (IN) of home automation equipments (3) of a home automation installation (17) of a building (1) comprising at least the following steps:
- carrying out a configuration of the command and/or control interface (IN) by applying a configuration method according to any one of claims 1 to 2,
- emitting a collection request (RC) toward the central entity (U) of the home automation installation (17), the collection request (RC) comprising the selection of the at least one status query (SeIE),
- obtaining, for each status query (E) of the selection of the at least one status query (SeIE), at least one corresponding status indication (IDC) relating to at least one actual status of at least one home automation equipment (3).

4. The command and/or control method according to the preceding claim, **characterized in that** said method further comprises a step of establishing an overall status information (IG) from the at least one corresponding status indication (IDC).

5. A computer program product comprising code instructions arranged to implement the steps of a configuration method according to any one of claims 1 to 2, when said program is executed by a processor of the command and/or control interface (IN).

6. The computer program product according to the preceding claim, arranged in the form of an application downloadable on said command and/or control interface (N).

7. A command and/or control interface (IN) comprising in memory the code instructions of a computer program product according to any one of claims 5 or 6 and arranged to execute such a computer program product, said command and/or control interface (IN) being arranged to be configured by applying a configuration method according to any one of claims 1 to 2.

8. The command and/or control interface (IN) according to the preceding claim, **characterized in that** said interface (IN) comprises a terminal, in particular a smartphone or a tablet, said terminal comprising a data input device and a display device.

9. A home automation installation (17) of a building (1) comprising a plurality of home automation equipments (3), a central entity (U) comprising a module (2') of communication with at least one home automation equipment (3) among the plurality of home automation equipments (3), and a command and/or control interface (IN) according to any one of claims 7 or 8 arranged to communicate with said central entity (U) or integrated to said central entity (U).
